# EUROPÄISCHE PATENTANMELDUNG

(11) **EP 3 457 337 A1**
(43) Veröffentlichungstag der Anmeldung: **20.03.2019**
(21) Anmeldenummer: 17191778.4
(22) Anmeldetag: 19.09.2017
(51) Int. Cl.: G06Q 10/06

(54) **VERFAHREN UND VORRICHTUNG ZUM COMPUTERUNTERSTÜTZTEN BEREITSTELLEN EINER IN FORM VON COMPUTERCODE VORLIEGENDEN STEUERINFORMATION ZU EINEM PROZESS, SOWIE COMPUTERPROGRAMMPRODUKT ZUR DURCHFÜHRUNG DES VERFAHRENS**

(71) Anmelder: ABB Schweiz AG, 5400 Baden (CH)
(72) Erfinder: Hoernicke, Mario, 76829 Landau (DE); Stark, Katharina, 69469 Weinheim (DE)

(57) **Zusammenfassung**

Die Erfindung betrifft ein Verfahren zum computerunterstützten Bereitstellen einer in Form von Computercode vorliegenden Steuerinformation zu einem technischen, Prozess, durchführbar mit einer Prozessstrecke aus Prozessmodulen, die jeweils eine eigenständige Steuereinheit aufweisen und zu denen eine Prozessmodulinformation und zumindest eine Dienstinformation vorliegt, letztere einen Dienst angebend, mit den Schritten:
- Bereitstellen einer Auswahlmöglichkeit (10, 14) für Prozessmodule und/oder deren Dienste an eine Bedienperson,
- Empfangen zumindest einer entsprechenden Eingabe,
- Bereitstellen der Möglichkeit (26) für die Bedienperson zum Koppeln auf zumindest eine Art der Darstellung zumindest zweier ausgewählter Prozessmodule beziehungsweise Dienste (18, 20, 22),
- Empfangen zumindest einer entsprechenden Eingabe,
- Bereitstellen einer Möglichkeit für die Bedienperson zum Vorgeben eines Flussschaubilds mit einer Mehrzahl von Schritten (28, 32, 36) und Übergängen (30, 34) zwischen den Schritten (28, 32, 36) zum Definieren des Prozesse,
- Empfangen zumindest zweier entsprechender Eingaben,
- zu jedem Schritt des so vorgegebenen Flussschaubilds Bereitstellen für zumindest einen Teil der ausgewählten Prozessmodule und/oder Dienste der Möglichkeit (40, 42) für die Bedienperson zum Vorgeben von Prozesssteuerbefehlen für den jeweiligen Schritt (28, 32, 36) und/oder zum Vorgeben von Transitionsbedingungen für einen Übergang zu einem gemäß dem Flussschaubild möglichen, dem jeweiligen Schritt (28, 32, 36) nachfolgenden Schritt (32, 36),
- Empfangen zumindest einer entsprechenden Eingabe,
- Bereitstellen der Steuerinformation anhand der vorliegenden Daten.

Zur Erfindung gehört auch eine Datenverarbeitungsvorrichtung und ein Computerprogrammprodukt.

## Beschreibung

Die Erfindung betrifft ein Verfahren und eine Datenverarbeitungsvorrichtung zum computerunterstützten Bereitstellen einer in Form von Computercode vorliegenden Steuerinformation zu einem technischen, insbesondere chemietechnischen oder pharmazietechnischen Prozess, welcher mithilfe einer automatisierten Prozessstrecke aus miteinander gekoppelten Prozessmodulen durchführbar ist, wobei jedes Prozessmodul eine eigenständige Steuereinheit aufweist, und wobei zu den Prozessmodulen eine Prozessmodulinformation und zumindest eine Dienstinformation vorliegt, wobei die zumindest eine Dienstinformation einen von dem jeweiligen Prozessmodul ausführbaren Dienst angibt. Sie betrifft auch ein Computerprogrammprodukt.

Die Modularisierung verfahrenstechnischer Anlagen wird vor allem in der Chemie- und Pharmaindustrie als hervorragende Möglichkeit wahrgenommen, zeitökonomisch und zu geringen Kosten Prozessstrecken zu bauen und einzusetzen, und auch wieder umbauen zu können. Dies lässt sich vor allem auch nutzen, um chemische und pharmazeutische Produkte in genau passenden technischen Prozessen in eher kleineren Mengen herzustellen.

Dienste (engl. "Services") stellen einzelne Funktionen des Prozessmoduls im Prozess dar, wie etwa Temperieren, Dosieren, Rühren etc.. In der Regel kann ein Prozessmodul mehrere Dienste ausführen. Die Prozessmodule sollen durch Aufruf der Dienste objektorientiert und zustandsbasiert angesteuert werden.

Ein einzelnes Prozessmodul umfasst eine Vielzahl von Komponenten, die zusammen für die Ausführung der einzelnen Dienste verantwortlich sind, und jedes Prozessmodul verfügt auch über eine eigene Steuereinheit für diese Komponenten. Eine übergeordnete Prozesssteuereinheit (in der sog. Prozessführungsebene) soll über eine Darstellung des Prozessmoduls oder idealerweise des gerade ausgeführten Dienstes verfügen, sie kommuniziert mit dem Prozessmodul und steuert extern die Steuereinheit des Prozessmoduls an, um die Dienste abzurufen und deren Einzelschritte oder Zustände einzustellen. Es ist hierzu erforderlich, dass die übergeordnete Prozesssteuereinheit über eine Information zu jedem Dienst und jedem Prozessmodul verfügt, die die o.g. Darstellung beinhaltet, angibt, wie die Kommunikation zu dem Prozessmodul zu erfolgen hat, und wie ein Dienst durch Steuerung auszuführen ist. Eine solche Information wird im Fachgebiet als "Module Type Package", MTP, bezeichnet. In der Industrie in Deutschland gibt es Bestrebungen, die Schnittstellen zwischen Prozessführungsebene und Prozessmodulen zu vereinheitlichen, insbesondere was die Darstellung in Codes wie etwa dem MTP angeht. Die VDE-Richtlinie 2658 ist ein erster Schritt in Richtung Normierung hierzu.

Das Entwerfen einer Prozessstrecke aus Prozessmodulen ist bisher schwierig und wird bisher nur durch sehr spezielle Anwendungen, beispielsweise wenn nur für Prozessmodule eines Herstellers eingesetzt werden, durch geeignete Computerprogramme unterstützt.

Herkömmlicherweise wird auch zum Zusammenstellen von Steuerbefehlen für Einheiten in bereits entworfene Prozessstrecken ein Computerprogramm eingesetzt. Solche Computerprogramme sind entweder bisher nicht für modular aufgebaute Prozessstrecken geeignet, oder sie erzeugen lediglich Steuercode für eine ganz bestimmte Art von Steuereinheit (Controller), was die Einsatzmöglichkeiten für ein solches Computerprogramm verringert.

Es ist Aufgabe der vorliegenden Erfindung, die Zusammenstellung einer Prozesstrecke und die Generierung von Steuerbefehlen für eine Prozessführungsebene derselben zu erleichtern.

Die Aufgabe wird durch ein Verfahren mit den Merkmalen nach Anspruch 1 gelöst, durch ein Computerprogrammprodukt mit den Merkmalen nach Anspruch 14 gelöst, und durch eine Datenverarbeitungsvorrichtung mit den Merkmalen nach Anspruch 15 gelöst. Vorteilhafte Ausgestaltungen sind in den Unteransprüchen angegeben.

Das erfindungsgemäße Verfahren zum computerunterstützten Bereitstellen einer in Form von Computercode vorliegenden Steuerinformation zu einem technischen, insbesondere chemietechnischen oder pharmazietechnischen Prozess, welcher mithilfe einer automatisierten Prozessstrecke aus miteinander gekoppelten Prozessmodulen durchführbar ist, wobei jedes Prozessmodul eine eigenständige Steuereinheit aufweist, und wobei zu den Prozessmodulen eine Prozessmodulinformation und zumindest eine Dienstinformation vorliegt, wobei die zumindest eine Dienstinformation einen von dem jeweiligen Prozessmodul ausführbaren Dienst angibt, umfasst die Schritte:
- Bereitstellen einer Auswahlmöglichkeit für Prozessmodule und/oder deren Dienste für eine Bedienperson,
- Empfangen zumindest einer Eingabe von der Bedienperson zur Auswahl zumindest zweier Prozessmodule beziehungsweise Dienste,
- Bereitstellen der Möglichkeit für die Bedienperson zum Koppeln auf zumindest eine Art der Darstellung zumindest zweier ausgewählter Prozessmodule beziehungsweise Dienste,
- Empfangen zumindest einer durch die Bedienperson gemachten Eingabe zum Koppeln von Darstellungen von Prozessmodulen oder Diensten, um die Prozessstrecke zu definieren,
- Bereitstellen einer Möglichkeit für die Bedienperson zum Vorgeben eines Flussschaubilds mit einer Mehrzahl von Schritten und Übergängen zwischen den Schritten zum Definieren des Prozesses,
- Empfangen zumindest zweier durch die Bedienperson gemachten Eingaben zum Vorgeben eines Flussschaubilds mit einer Mehrzahl von Schritten und Übergängen zwischen den Schritten zum Definieren des Prozesses,
- zu jedem Schritt des so vorgegebenen Flussschaubilds Bereitstellen für zumindest einen Teil der ausgewählten Prozessmodule und/oder Dienste der Möglichkeit für die Bedienperson zum Vorgeben von Prozesssteuerbefehlen für den jeweiligen Schritt und/oder zum Vorgeben von Transitionsbedingungen für einen Übergang zu einem gemäß dem Flussschaubild möglichen, dem jeweiligen Schritt nachfolgenden Schritt,
- Empfangen zumindest einer durch die Bedienperson gemachten Eingabe für zumindest einen Teil der ausgewählten Prozessmodule und/oder Dienste zum Vorgeben von Prozesssteuerbefehlen für den jeweiligen Schritt und/oder zum Vorgeben von Transitionsbedingungen für einen Übergang zu einem gemäß dem Flussschaubild möglichen, dem jeweiligen Schritt nachfolgenden Schritt,
- Bereitstellen der Steuerinformation anhand
   a) der Definition der Prozessstrecke und
   b) der zu den für die Prozessstrecke ausgewählten Diensten vorliegenden Dienstinformation beziehungsweise der zu den ausgewählten Prozessmodulen vorliegenden Prozessmodulinformation und/oder Dienstinformation sowie
   c) anhand der vorgegebenen Prozesssteuerbefehle und Transitionsbedingungen.

Indem in ein und demselben Verfahren, typischerweise verwirklicht durch Einsatz eines Computerprogramms für einen Personalcomputer, sowohl die Zusammenstellung der Prozessstrecke unter Definition der Dienste als auch sodann genaue Steuerabläufe für die einzelnen Prozessschritte definiert werden, kann die gewonnene Steuerinformation zielgenau auf zunächst abstrakter Ebene festgelegt werden, sodass ein flexibler Einsatz der so vorgegebenen Steuerinformation in konkreteren Verwirklichungen möglich ist.

Bei einer bevorzugten Ausführungsform des Verfahrens ist zu Prozessmodulen, welche mehr als einen Dienst ausführen können, bei ihrer direkten Auswahl auch in der Folge der gewünschte Dienst dieses Prozessmoduls auswählbar, und es wird eine entsprechende, durch die Bedienperson gemachte Eingabe empfangen.

Da generell vorgesehen ist, dass das Verfahren durch einen Computer durchgeführt wird, wird bei einer weiteren bevorzugten Ausführungsform des Verfahrens das Verfahren durch einen Computer durchgeführt, in welchen nach Beginn des Verfahrens die außerhalb des Computers vorliegende Prozessmodulinformation und/ oder die zumindest eine Dienstinformation nachladbar ist, insbesondere aus einem Netzwerk, durch Extrahieren aus einer Email oder deren Anhang, oder von einem Datenträger, vorzugsweise einem USB-Stick. Mit anderen Worten lässt das Computerprogramm zu, dass neue Prozessmodule einsetzbar sind, zu denen bisher noch keine Prozessmodulinformationen und/ oder Dienstinformationen vorgelegen haben.

Bei einer weiteren bevorzugten Ausführungsform des Verfahrens erfolgt das Bereitstellen der Möglichkeit zum Koppeln zumindest solange, bis die Darstellung aller ausgewählten Prozessmodule beziehungsweise Dienste mit jeweils der Darstellung eines anderen Prozessmoduls beziehungsweise einem anderen Dienste gekoppelt ist. Das Programm sorgt somit für Vollständigkeit der Eingaben und somit eine stimmige, abgeschlossene Prozesstrecke.

Bei einer weiteren bevorzugten Ausführungsform des Verfahrens ist eine Art von Prozessmodul mehrfach auswählbar, es sind also mehrere so genannte Instanzen des gleichen Typs oder mit gleicher Bauweise möglich. Dies trägt der Tatsache Rechnung, dass in Prozessen häufig eine Art von Prozessmodul mehrfach einsetzbar ist, beispielsweise in parallelen gleichartigen Diensten, bevor eine Zusammenführung der bearbeiteten chemischen Stoffe erfolgt.

Bei einer weiteren bevorzugten Ausführungsform des Verfahrens wird die Auswahlmöglichkeit für Prozessmodule beziehungsweise Dienste durch grafische Darstellung gegeben und die zugehörige Eingabe ist durch eine Computermaus oder über einen näherungs- oder berührungsempfindlichen Bildschirm ermöglicht, dies vorzugsweise durch Drag-und-Drop. Dies sorgt für eine hohe Bedienerfreundlichkeit.

Bei einer weiteren bevorzugten Ausführungsform des Verfahrens wird anhand der Steuerinformation eine Darstellung, insbesondere grafische Darstellung, zur Angabe des Prozesses erzeugt. Solche grafischen Darstellungen werden insbesondere später, beim Ablauf des Prozesses, benötigt, etwa für eine Steuerzentrale.

Hierbei ist weiter vorzugsweise vorgesehen, dass eine solche Darstellung erzeugt wird, welche weitere Eingaben vor oder bei dem Prozess zu dessen Gestaltung oder zur Beendigung des Prozesses ermöglicht. Somit kann der Operator (Person in der Fabrik, die für die Überwachung des Prozesses anwesend ist) in den Prozess und seinen Ablauf leichter eingreifen.

Bei einer weiteren bevorzugten Ausführungsform des Verfahrens wird die Steuerinformation zu einem Steuerprogramm für eine industrielle Steuerungseinheit, insbesondere zum Einsatz unmittelbar am Ort der gebauten Prozessstrecke, kompiliert und auf diese aufgespielt. Es ist von Vorteil, wenn die Steuerinformation in einer geeigneten Vorstufe vorliegt, sodass sie gegebenenfalls auch für mehrere Arten von industriellen Steuerungseinheiten nutzbar ist.

Alternativ oder zusätzlich wird die Steuerinformation zu einem Steuerprogramm für einen Personalcomputer, einen Tabletcomputer, ein Smartphone oder sonstigen tragbaren Rechner kompiliert und auf diesen beziehungsweise dieses aufgespielt, insbesondere zum Einsatz unmittelbar am Ort der gebauten Prozessstrecke. Es ist von Vorteil, wenn die Steuerinformation in einer (auch) hierfür geeigneten Vorstufe vorliegt, insbesondere wenn sie zudem für mehrere Arten von Personalcomputern, Tabletcomputern, Smartphones oder sonstigen tragbaren Rechnern nutzbar ist.

Weiter alternativ oder weiter zusätzlich wird die Steuerinformation zu einem Steuerprogramm für eine dezentrale Rechnereinheit zum Einsatz fernab der gebauten Prozessstrecke, insbesondere in einer Computer-Cloud, kompiliert und auf diese aufgespielt. Es ist von Vorteil, wenn die Steuerinformation in einer (auch) hierfür geeigneten Vorstufe vorliegt, insbesondere wenn sie zudem für mehrere Arten von dezentralen Rechnereinheiten nutzbar ist.

Bei einer weiteren bevorzugten Ausführungsform des Verfahrens wird in die Steuerinformation anhand der zu den für die Prozessstrecke ausgewählten Prozessmodulen vorliegenden Prozessmodulinformation beziehungsweise anhand der vorliegenden Prozessmodulinformation der zu den ausgewählten Diensten zugehörigen Prozessmodule eine Information zum Kommunikationsverhalten der Prozessmodule aus der Prozessstrecke aufgenommen, vorzugsweise unter Verwendung des Kommunikationsprotokolls OPC Unified Architecture, OPC UA, der OPC foundation. Es ist für die Prozessführungsebene wichtig, wenn diese Information zum Kommunikationsverhalten bereits in der durch das Computerprogramm ausgegebenen Steuerinformation vorliegt.

Bei einer weiteren bevorzugten Ausführungsform des Verfahrens wird zusätzlich zu der Steuerinformation anhand des von der Bedienperson vorgegebenen Flussschaubilds ein Funktionsablaufplan in der Ablaufsprache gemäß IEC 61131-3 bereitgestellt. Solche Funktionsablaufpläne können immer wieder hilfreich sein, etwa ebenfalls beim Ablauf des Prozesses, etwa für eine Steuerzentrale.

Das erfindungsgemäße Computerprogrammprodukt zum computerunterstützten Bereitstellen einer in Form von Computercode vorliegenden Steuerinformation zu einem technischen, insbesondere chemietechnischen oder pharmazietechnischen Prozess, welcher mithilfe einer automatisierten Prozessstrecke aus miteinander gekoppelten Prozessmodulen durchführbar ist, wobei jedes Prozessmodul eine eigenständige Steuereinheit aufweist, und wobei zu den Prozessmodulen eine Prozessmodulinformation und zumindest eine Dienstinformation vorliegt, wobei die zumindest eine Dienstinformation einen von dem jeweiligen Prozessmodul ausführbaren Dienst angibt, wobei der Computerprogrammcode, wenn er auf einem Computer geladen und aufgerufen ist, der auf die Prozessmodulinformation zu den Prozessmodulen und die jeweilige zumindest eine Dienstinformation zugreifen kann, bewirkt, dass der Computer das oben beschriebene Verfahren in zumindest einer seiner Ausführungsformen ausführt. Somit ist das Verfahren leicht und schnell ausführbar.

Die erfindungsgemäße Datenverarbeitungsvorrichtung zum Bereitstellen einer in Form von Computercode vorliegenden Steuerinformation zu einem technischen, insbesondere chemietechnischen oder pharmazietechnischen Prozess, welcher mithilfe einer automatisierten Prozessstrecke aus miteinander gekoppelten Prozessmodulen durchführbar ist, wobei jedes Prozessmodul eine eigenständige Steuereinheit aufweist, und wobei zu den Prozessmodulen eine Prozessmodulinformation und zumindest eine Dienstinformation vorliegt, wobei die zumindest eine Dienstinformation einen von dem jeweiligen Prozessmodul ausführbaren Dienst angibt, weist eine Mensch-Maschine-Schnittstelle auf und weist ferner auf:
- Mittel zum Bereitstellen einer Auswahlmöglichkeit für Prozessmodule und/oder deren Dienste über die Mensch-Maschine-Schnittstelle für eine Bedienperson,
- Mittel zum Empfangen zumindest einer über die Mensch-Maschine-Schnittstelle gemachten Eingabe von der Bedienperson zur Auswahl zumindest zweier Prozessmodule beziehungsweise Dienste,
- Mittel zum Bereitstellen der Möglichkeit für die Bedienperson zum Koppeln auf zumindest eine Art der Darstellung zumindest zweier ausgewählter Prozessmodule beziehungsweise Dienste über die Mensch-Maschine-Schnittstelle,
- Mittel zum Empfangen zumindest einer über die Mensch-Maschine-Schnittstelle durch die Bedienperson gemachten Eingabe zum Koppeln von Darstellungen von Prozessmodulen oder Diensten, um die Prozessstrecke zu definieren,
- Mittel zum Bereitstellen einer Möglichkeit für die Bedienperson zum Vorgeben eines Flussschaubilds mit einer Mehrzahl von Schritten und Übergängen zwischen den Schritten zum Definieren des Prozesses über die Mensch-Maschine-Schnittstelle,
- Mittel zum Empfangen zumindest zweier über die Mensch-Maschine-Schnittstelle durch die Bedienperson gemachten Eingaben zum Vorgeben eines Flussschaubilds mit einer Mehrzahl von Schritten und Übergängen zwischen den Schritten zum Definieren des Prozesses,
- Mittel zum Bereitstellen, zu jedem Schritt des so vorgegebenen Flussschaubilds, für zumindest einen Teil der ausgewählten Prozessmodule und/oder Dienste der Möglichkeit für die Bedienperson zum Vorgeben von Prozesssteuerbefehlen für den jeweiligen Schritt über die Mensch-Maschine-Schnittstelle und/oder zum Vorgeben von Transitionsbedingungen für einen Übergang zu einem gemäß dem Flussschaubild möglichen, dem jeweiligen Schritt nachfolgenden Schritt über die Mensch-Maschine-Schnittstelle,
- Mittel zum Empfangen zumindest einer über die Mensch-Maschine-Schnittstelle durch die Bedienperson gemachten Eingabe für zumindest einen Teil der ausgewählten Prozessmodule und/oder Dienste zum Vorgeben von Prozesssteuerbefehlen für den jeweiligen Schritt und/oder zum Vorgeben von Transitionsbedingungen für einen Übergang zu einem gemäß dem Flussschaubild möglichen, dem jeweiligen Schritt nachfolgenden Schritt,
- Mittel zum Bereitstellen der Steuerinformation anhand
   a) der Definition der Prozessstrecke und
   b) der zu den für die Prozessstrecke ausgewählten Diensten vorliegenden Dienstinformation beziehungsweise der zu den ausgewählten Prozessmodulen vorliegenden Prozessmodulinformation und/oder Dienstinformation sowie
   c) anhand der vorgegebenen Prozesssteuerbefehle und Transitionsbedingungen.

Die oben zum Verfahren genannten Vorteile gelten entsprechend für die Datenverarbeitungsvorrichtung, und bevorzugte Ausführungsformen sind entsprechend ableitbar.

Alle genannten Mittel der Datenverarbeitungsvorrichtung können in Form von Prozessoren oder sonstigen Datenverarbeitungsuntereinheiten der Datenverarbeitungsvorrichtung bereitgestellt sein, wobei solche Datenverarbeitungsuntereinheiten in einer Ausführungsform zugleich die Funktion mehrerer der genannten Mittel einnehmen können. Zumindest einige der Mittel können ggf. auf Speichereinrichtungen, ausgewählt aus Speichereinrichtungen jedweder Art, zugreifen oder solche umfassen. Die Mittel können ferner umfassen, dass ein bestimmter Programmcode vorhanden ist und auf einer Einheit abläuft, beziehungsweise sie können einen entsprechenden Softwareblock selbst umfassen. Alternativ können ein Teil der Mittel als dedizierte elektrische Schaltungen bereitgestellt sein.

Vorzugsweise ist vorgesehen, dass die Mensch-Maschine-Schnittstelle einen Bildschirm aufweist. Vorzugsweise ist zugleich eine Eingabeeinrichtung bereitgestellt, etwa eine Computermaus. Sie kann alternativ oder zusätzlich durch eine geeignete Ausbildung des Bildschirms, etwa Tastfelder auf dem Bildschirm, bereitgestellt sein.

Weiter vorzugsweise ist vorgesehen, dass die Datenverarbeitungsvorrichtung einen Speicher zum Speichern (zumindest) der bereitgestellten Steuerinformation aufweist.

Nachfolgend werden bevorzugte Ausführungsformen der Erfindung unter Bezug auf die Zeichnung näher beschrieben. Hierin zeigt:
- Fig. 1: eine schematische Darstellung der prinzipiell vorhandenen Kommunikationsarchitektur für eine Prozessumgebung,
- Fig. 2: ein Fenster eines Computerprogramms, welches eine Ausführungsform des Verfahrens umsetzt, mit einem Menü zur Auswahl von Diensten von Prozessmodulen in einem Teilfenster,
- Fig. 3: das Fenster aus Fig. 2, bei dem eine Auswahl von Diensten erfolgt ist und deren Kopplung zu einer Prozessstrecke in einem weiteren Teilfenster bereits teilweise erfolgt ist,
- Fig. 4: das Fenster aus Fig. 2, bei dem zu der definierten Prozessstrecke in einem Teilfenster durch Angabe einer Schrittfolge ein Flussdiagramm entworfen ist,
- Fig. 5: das Fenster aus Fig. 4, bei dem zu den Schritten des Flussdiagramms in weiteren (Popup-) Teilfenstern Prozesssteuerbefehle beziehungsweise Transitionsbedingungen festlegbar sind, und
- Fig. 6: ein Flussschaubild zur Erläuterung einer Ausführungsform des erfindungsgemäßen Verfahrens.

Ein in den Figuren nicht gezeigtes Prozessmodul kann mit anderen Prozessmodulen zu einer Prozessstrecke verschaltet werden, in der ein chemischer oder pharmazietechnischer Prozess ausführbar ist, wobei jedes Prozessmodul in einem bestimmten Prozess eine bestimmte Funktion aus einer Vielzahl von möglichen Funktionen ausübt. Solche verfahrenstechnischen Funktionen werden auch als Dienste oder englisch "Services" bezeichnet beziehungsweise sind in solche "gekapselt". Das nachfolgend vorgestellte Computerprogramm hat die Aufgabe, mit der Unterstützung eines (Personal-)Computers (beziehungsweise Rechners) derartige Prozesse durch Auswahl der Dienste aus einer Vorgabe zu definieren und darauf aufbauend eine Steuerinformation bereitzustellen. Man bezeichnet die Zusammenstellung als " *Orchestrierung "* und die Steuerinformation soll idealerweise für eine Mehrzahl von bei der Prozessführung eingesetzten Laufzeitumgebungen gleichermaßen verwendbar sein.

Vorausgesetzt ist, dass zu jedem Dienst eine Information bereitgestellt ist, auf deren Grundlage einer übergeordneten Steuereinheit im Prozess (Prozessführungsebene) eine Ansteuerung des Prozessmoduls ermöglicht werden kann. Vorzugsweise liegt diese Information in einem Format gemäß der VDE-Richtlinie 2658 vor- Ferne soll später ein SPS-Code gemäß IEC 61131-3 generiert werden. Ein vollständiges Datenpaket zu einem Prozessmodul wird als "Module Type Package", MTP, bezeichnet.

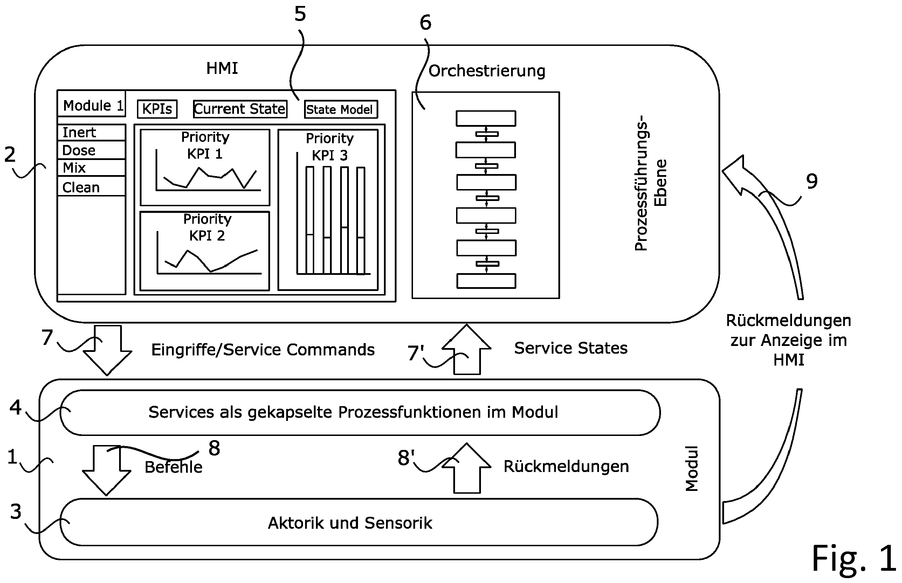

Fig. 1 zeigt schematisch eine Kommunikationsarchitektur für eine Prozessumgebung, wie sie bei dem Verfahren gegeben ist. Ein im Ganzen mit 1 bezeichnetes Prozessmodul kommuniziert extern mit einer Prozessführungsebene 2. Die mit 3 bezeichnete Aktorik und Sensorik des Prozessmoduls 1 kommuniziert intern mit den Diensten (englisch *"Services"*), welche gekapselte Prozessfunktionen im Prozessmodul 1 definieren. Die Prozessführungsebene verfügt über eine Mensch-Maschine-Schnittstelle 5 (HMI für *"Human machine interface*") und eine Einheit 6 für die Orchestrierung.

Die Prozessführungsebene sendet Steuerbefehle 7 (*"Service commands"*, *"Eingriffe"*) an das Prozessmodul 1 und empfängt eine Dienstzustandsinformation 7' (*"service states"*) von diesem. Im Prozessmodul 1 senden die Dienste 4 Befehle 8 und empfangen Rückmeldungen 8'.

Aufgabe der Orchestrierung 6 ist es, für die Prozessführungsebene 2 Steuerbefehle 7 zu definieren, die von den Diensten 4 im Prozessmodul 1 in konkrete Befehle umsetzbar sind, und ferner soll aus den Dienstzustandsinformationen 7 eine passende Reaktion abgeleitet werden, die den Rückmeldungen 8 Rechnung trägt.

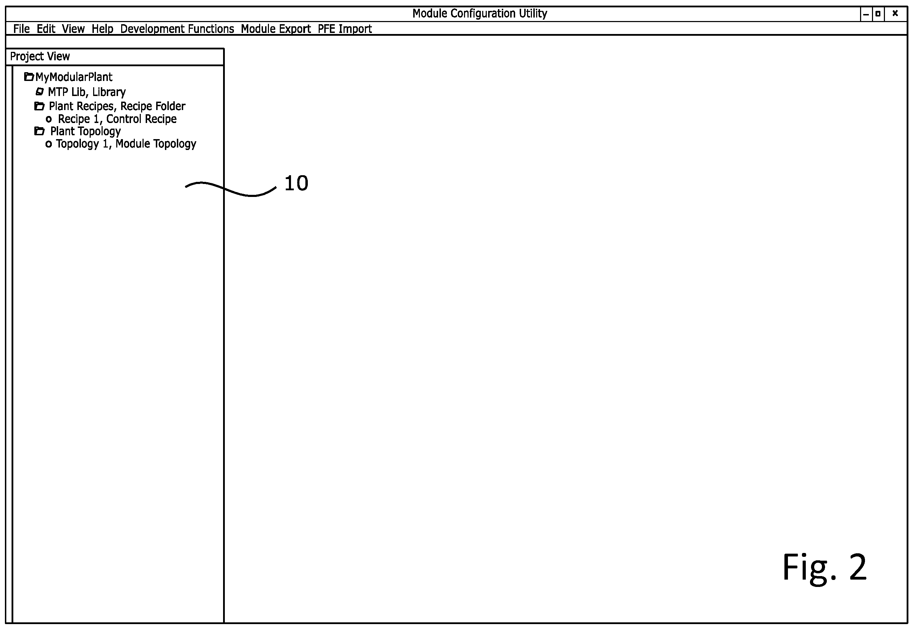

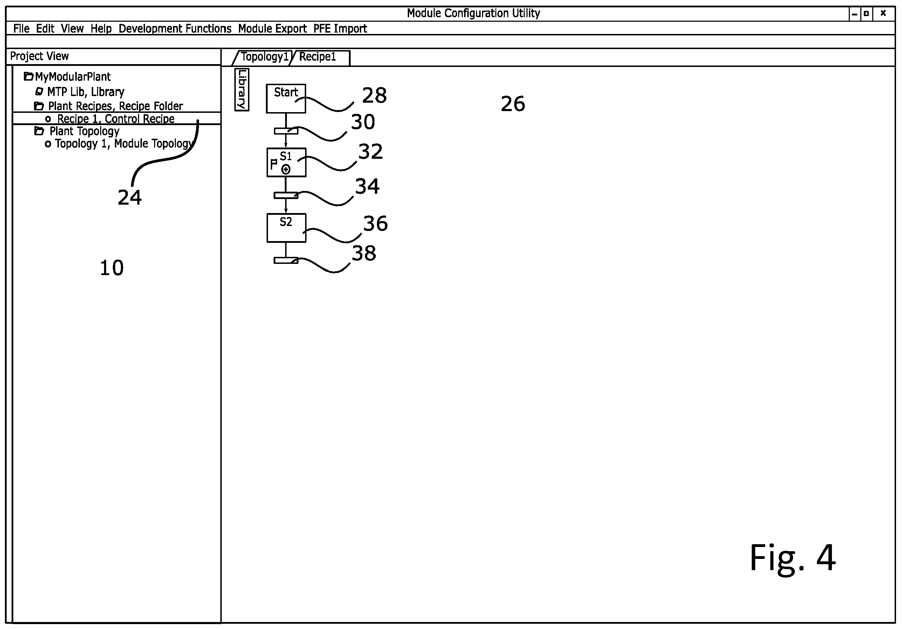

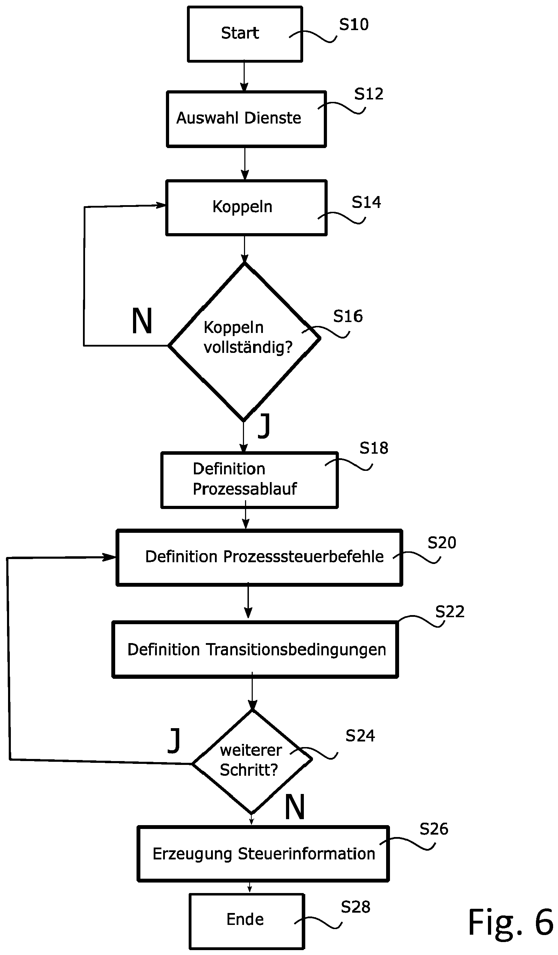

Das Computerprogramm, welches der Orchestrierung dient, wird nachfolgend unter Bezug auf die Fig. 2 bis 5 und Fig. 6 näher beschrieben.

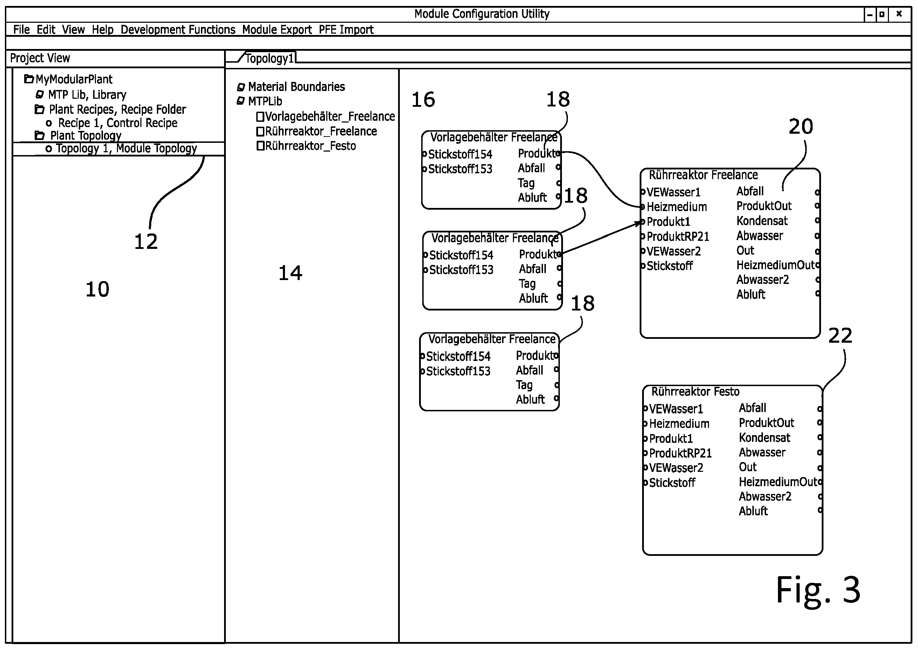

Das Verfahren beginnt im Schritt S10, worin beispielsweise das Computerprogramm hochgefahren wird, sodass auf einem Bildschirm ein Fenster wie etwa das in Fig. 2 gezeigte dargestellt wird. In dem Fenster ist ein Menü 10 zur Auswahl von Pfaden zum Aufrufen aus einer Bibliothek bereitgestellt. Im Schritt S12 erfolgt dann die Auswahl von mehreren (zumindest zwei) Diensten. Hierzu wird eine Darstellung wie etwa in Fig. 3 erzeugt: Der Benutzer des Programmes (Bedienperson, die den Prozess entwirft) kann die Teilfenster 14 und 16 öffnen. Das Teilfenster 14 zeigt die Dienste aus der Bibliothek an. Im Teilfenster 16 wird eine Darstellung der Prozessstrecke erzeugt. Durch Drag-und-Drop über eine Computermaus oder sonstige Eingabeeinrichtung kann der Benutzer Symbole 18, 20, 22 für Dienste aus dem Feld 14 heraus erzeugen und im Feld 16 platzieren. Die Symbole 18 stehen für gleiche Dienste derselben Art von Prozessmodul, die hier also in mehrfachen Instanzen vorgesehen sind. Zum Dienst 20 sind bereits Verbindungen zweier der Dienste 18 gemäß Schritt S14 erzeugt ("Koppeln"), weitere Verbindungen, etwa zum Dienst 22, müssen folgen. Dazu wird im Schritt S16 geprüft, ob alle Dienste mindestens einfach mit einem anderen gekoppelt sind. Falls dies nicht der Fall ist, wird vom Schritt S16 zum Schritt S 14 zurückgekehrt. Sonst wird zum Schritt S18 übergegangen: Im Schritt S18 wechselt nun das Teilfenster 16 durch Aufruf des Menüpunkts 24 im Menü 10 zum Teilfenster 26 an gleicher Stelle, wobei in diesem Fenster eine Schrittfolge mit Übergängen definierbar ist, beispielsweise gleichermaßen durch Drag-und-Drop. Dem einen Schritt darstellenden Kasten 28 folgt der Übergang 30 zum Kasten 32 für den nächsten Schritt, dann kommt der Übergang 34 zum Kasten 36, bis zum Ende 38.

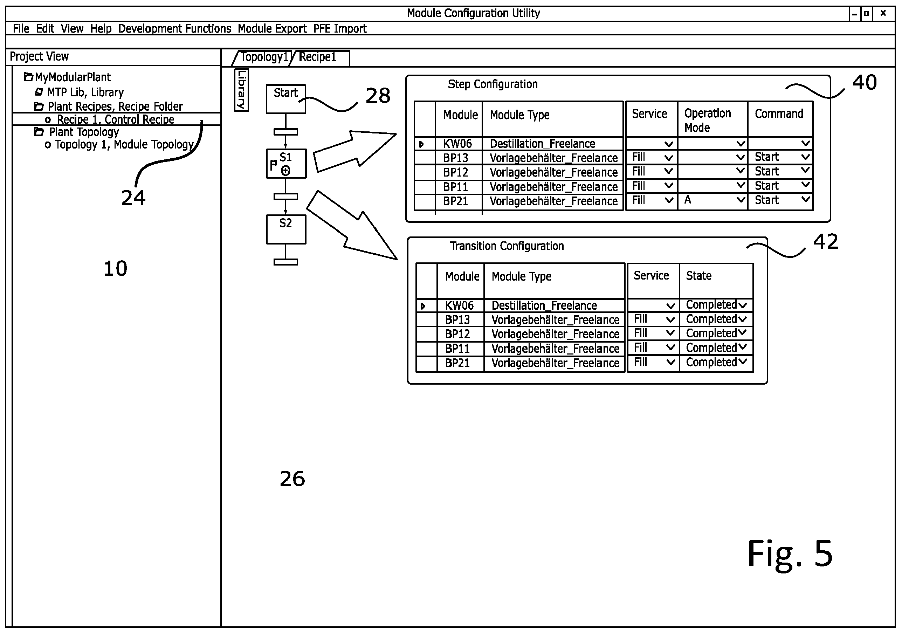

Sobald das Gerüst an Schritten für den Prozess feststeht, wird im Schritt S20 zu jedem Kasten 28, 32, 36 die Möglichkeit gegeben, wie aus Fig. 5 ersichtlich, in einem ersten Teilfenster 40 im Rahmen des Schrittes S20 Prozesssteuerbefehle anzugeben, indem den Namen der Prozessmodule Dienste und interne Befehle für deren Umsetzung zugeordnet werden. In einem zweiten Teilfenster 42 können im Rahmen des Schrittes S22 Transitionsbedingungen festgelegt werden: Aus diesen ist ersichtlich, bei welchem Zustand jedes der Dienste zum nächsten Schritt des Prozesses (also dem nächsten Kasten) überzugehen ist. Im Schritt S24 wird geprüft, ob es in dem Flussschaubild noch einen Schritt (ein weiteren Kasten) gibt. Falls Ja, wird zum Schritt S20 zurückgekehrt, ansonsten wird im nächsten Schritt S26 die gewünschte Steuerinformation erzeugt. Sodann endet das Verfahren im Schritt S28.

Mit der Steuerinformation kann wahlweise der Steuercode für eine industrielle Steuereinheit, für einen Personalcomputer oder für einen Cloud-Rechner erzeugt werden. Die Laufzeitumgebung für den Prozess ist daher variabel wählbar.

## Patentansprüche

1. Verfahren zum computerunterstützten Bereitstellen einer in Form von Computercode vorliegenden Steuerinformation zu einem technischen, insbesondere chemietechnischen oder pharmazietechnischen Prozess, welcher mithilfe einer automatisierten Prozessstrecke aus miteinander gekoppelten Prozessmodulen durchführbar ist, wobei jedes Prozessmodul eine eigenständige Steuereinheit aufweist, und wobei zu den Prozessmodulen eine Prozessmodulinformation und zumindest eine Dienstinformation vorliegt, wobei die zumindest eine Dienstinformation einen von dem jeweiligen Prozessmodul ausführbaren Dienst angibt,
wobei das Verfahren die Schritte umfasst:
- Bereitstellen einer Auswahlmöglichkeit (10, 14) für Prozessmodule und/oder deren Dienste für eine Bedienperson,
- Empfangen zumindest einer Eingabe von der Bedienperson zur Auswahl zumindest zweier Prozessmodule beziehungsweise Dienste (18, 20, 22),
- Bereitstellen der Möglichkeit für die Bedienperson zum Koppeln auf zumindest eine Art der Darstellung zumindest zweier ausgewählter Prozessmodule beziehungsweise Dienste (18, 20, 22),
- Empfangen zumindest einer durch die Bedienperson gemachten Eingabe zum Koppeln von Darstellungen von Prozessmodulen oder Diensten, um die Prozessstrecke zu definieren,
- Bereitstellen einer Möglichkeit (26) für die Bedienperson zum Vorgeben eines Flussschaubilds mit einer Mehrzahl von Schritten und Übergängen zwischen den Schritten zum Definieren des Prozesses,
- Empfangen zumindest zweier durch die Bedienperson gemachten Eingaben zum Vorgeben eines Flussschaubilds mit einer Mehrzahl von Schritten (28, 32, 26) und Übergängen (30, 34) zwischen den Schritten (28, 32, 26) zum Definieren des Prozesses,
- zu jedem Schritt des so vorgegebenen Flussschaubilds Bereitstellen für zumindest einen Teil der ausgewählten Prozessmodule und/oder Dienste (28, 32, 26) der Möglichkeit (40, 42) für die Bedienperson zum Vorgeben von Prozesssteuerbefehlen für den jeweiligen Schritt und/oder zum Vorgeben von Transitionsbedingungen für einen Übergang zu einem gemäß dem Flussschaubild möglichen, dem jeweiligen Schritt (28, 32, 26) nachfolgenden Schritt (32, 26),
- Empfangen zumindest einer durch die Bedienperson gemachten Eingabe für zumindest einen Teil der ausgewählten Prozessmodule und/oder Dienste (28, 32, 26) zum Vorgeben von Prozesssteuerbefehlen für den jeweiligen Schritt (28, 32, 26) und/oder zum Vorgeben von Transitionsbedingungen für einen Übergang zu einem gemäß dem Flussschaubild möglichen, dem jeweiligen Schritt (28, 32, 26) nachfolgenden Schritt (32, 26),
- Bereitstellen der Steuerinformation anhand
a) der Definition der Prozessstrecke und
b) der zu den für die Prozessstrecke ausgewählten Diensten vorliegenden Dienstinformation beziehungsweise der zu den ausgewählten Prozessmodulen vorliegenden Prozessmodulinformation und/oder Dienstinformation sowie
c) anhand der vorgegebenen Prozesssteuerbefehle und Transitionsbedingungen.

2. Verfahren nach Anspruch 1, bei dem zu Prozessmodulen, welche mehr als einen Dienst ausführen können, bei ihrer Auswahl auch der Dienst dieses Prozessmoduls auswählbar ist und eine entsprechende durch die Bedienperson gemachte Eingabe empfangen wird.

3. Verfahren nach Anspruch 1 oder 2, bei dem das Verfahren durch einen Computer durchgeführt wird, in den nach Beginn des Verfahrens die außerhalb des Computers vorliegende Prozessmodulinformation und/ oder die zumindest eine Dienstinformation nachladbar ist, insbesondere aus einem Netzwerk, durch Extrahieren aus einer Email oder deren Anhang, oder von einem Datenträger, vorzugsweise einem USB-Stick.

4. Verfahren nach einem der vorhergehenden Ansprüche, bei dem das Bereitstellen der Möglichkeit zum Koppeln zumindest solange erfolgt, bis die Darstellung (18, 20, 22) aller ausgewählten Prozessmodule beziehungsweise Dienste mit jeweils der Darstellung (18, 20, 22) eines anderen Prozessmoduls beziehungsweise einem anderen Dienst (18, 20, 22) gekoppelt ist.

5. Verfahren nach einem der vorhergehenden Ansprüche, bei dem eine Art von Prozessmodul beziehungsweise ein Dienst (18) mehrfach auswählbar ist.

6. Verfahren nach einem der vorhergehenden Ansprüche, bei dem die Auswahlmöglichkeit für Prozessmodule beziehungsweise Dienste durch grafische Darstellung (12, 14, 16) gegeben wird und die zugehörige Eingabe durch eine Computermaus oder über einen näherungs- oder berührungsempfindlichen Bildschirm ermöglicht ist, vorzugsweise durch Drag-und-Drop ermöglicht ist.

7. Verfahren nach einem der vorhergehenden Ansprüche, bei dem anhand der Steuerinformation eine Darstellung, insbesondere grafische Darstellung, zur Angabe des Prozesses erzeugt wird.

8. Verfahren nach Anspruch 7, bei dem eine solche Darstellung erzeugt wird, welche weitere Eingaben vor oder bei dem Prozess zu dessen Gestaltung oder zur Beendigung des Prozesses ermöglicht.

9. Verfahren nach einem der vorhergehenden Ansprüche, bei dem die Steuerinformation zu einem Steuerprogramm für eine industrielle Steuerungseinheit, insbesondere zum Einsatz unmittelbar am Ort der gebauten Prozessstrecke, kompiliert und auf diese aufgespielt wird.

10. Verfahren nach einem der vorhergehenden Ansprüche, bei dem die Steuerinformation zu einem Steuerprogramm für einen Personalcomputer, einen Tabletcomputer, ein Smartphone oder sonstigen tragbaren Rechner kompiliert und auf diesen beziehungsweise dieses aufgespielt wird, insbesondere zum Einsatz unmittelbar am Ort der gebauten Prozessstrecke.

11. Verfahren nach einem der vorhergehenden Ansprüche, bei dem die Steuerinformation zu einem Steuerprogramm für eine dezentrale Rechnereinheit zum Einsatz fernab der gebauten Prozessstrecke, insbesondere in einer Computer-Cloud, kompiliert und auf diese aufgespielt wird.

12. Verfahren nach einem der vorhergehenden Ansprüche, bei dem in die Steuerinformation anhand der zu den für die Prozessstrecke ausgewählten Prozessmodulen vorliegenden Prozessmodulinformation beziehungsweise anhand der vorliegenden Prozessmodulinformation der zu den ausgewählten Diensten zugehörigen Prozessmodule eine Information zum Kommunikationsverhalten der Prozessmodule aus der Prozessstrecke aufgenommen wird, vorzugsweise unter Verwendung des Kommunikationsprotokolls OPC Unified Architecture, OPC UA, der OPC foundation.

13. Verfahren nach einem der vorhergehenden Ansprüche, bei dem zusätzlich zu der Steuerinformation anhand des von der Bedienperson vorgegebenen Flussschaubilds ein Funktionsablaufplan in der Ablaufsprache gemäß IEC 61131-3 bereitgestellt wird.

14. Computerprogrammprodukt zum computerunterstützten Bereitstellen einer in Form von Computercode vorliegenden Steuerinformation zu einem technischen, insbesondere chemietechnischen oder pharmazietechnischen Prozess, welcher mithilfe einer automatisierten Prozessstrecke aus miteinander gekoppelten Prozessmodulen durchführbar ist, wobei jedes Prozessmodul eine eigenständige Steuereinheit aufweist, und wobei zu den Prozessmodulen eine Prozessmodulinformation und zumindest eine Dienstinformation vorliegt, wobei die zumindest eine Dienstinformation einen von dem jeweiligen Prozessmodul ausführbaren Dienst (18, 20, 22) angibt, wobei der Computerprogrammcode, wenn er auf einem Computer geladen und aufgerufen ist, der auf die Prozessmodulinformation zu den Prozessmodulen und die jeweilige zumindest eine Dienstinformation zugreifen kann, bewirkt, dass der Computer das Verfahren nach einem der Ansprüche 1 bis 13 ausführt.

15. Datenverarbeitungsvorrichtung zum Bereitstellen einer in Form von Computercode vorliegenden Steuerinformation zu einem technischen, insbesondere chemietechnischen oder pharmazietechnischen Prozess, welcher mithilfe einer automatisierten Prozessstrecke aus miteinander gekoppelten Prozessmodulen durchführbar ist, wobei jedes Prozessmodul eine eigenständige Steuereinheit aufweist, und wobei zu den Prozessmodulen eine Prozessmodulinformation und zumindest eine Dienstinformation vorliegt, wobei die zumindest eine Dienstinformation einen von dem jeweiligen Prozessmodul ausführbaren Dienst angibt, wobei die Datenverarbeitungsvorrichtung eine Mensch-Maschine-Schnittstelle aufweist und ferner aufweist:
- Mittel zum Bereitstellen einer Auswahlmöglichkeit (10, 14, 16) für Prozessmodule und/oder deren Dienste (18, 20, 22) über die Mensch-Maschine-Schnittstelle für eine Bedienperson,
- Mittel zum Empfangen zumindest einer über die Mensch-Maschine-Schnittstelle gemachten Eingabe von der Bedienperson zur Auswahl zumindest zweier Prozessmodule beziehungsweise Dienste (18, 20, 22),
- Mittel zum Bereitstellen der Möglichkeit für die Bedienperson zum Koppeln auf zumindest eine Art der Darstellung zumindest zweier ausgewählter Prozessmodule beziehungsweise Dienste (18, 20, 22) über die Mensch-Maschine-Schnittstelle,
- Mittel zum Empfangen zumindest einer über die Mensch-Maschine-Schnittstelle durch die Bedienperson gemachten Eingabe zum Koppeln von Darstellungen (18, 20, 22) von Prozessmodulen oder Diensten, um die Prozessstrecke zu definieren,
- Mittel zum Bereitstellen einer Möglichkeit (26) für die Bedienperson zum Vorgeben eines Flussschaubilds mit einer Mehrzahl von Schritten (28, 32, 36) und Übergängen (30, 34) zwischen den Schritten (28, 32, 36) zum Definieren des Prozesses über die Mensch-Maschine-Schnittstelle,
- Mittel zum Empfangen zumindest zweier über die Mensch-Maschine-Schnittstelle durch die Bedienperson gemachten Eingaben zum Vorgeben eines Flussschaubilds mit einer Mehrzahl von Schritten (28, 32, 36) und Übergängen (30, 34) zwischen den Schritten (28, 32, 36) zum Definieren des Prozesses,
- Mittel zum Bereitstellen, zu jedem Schritt (28, 32, 36) des so vorgegebenen Flussschaubilds, für zumindest einen Teil der ausgewählten Prozessmodule und/oder Dienste der Möglichkeit (40, 42) für die Bedienperson zum Vorgeben von Prozesssteuerbefehlen für den jeweiligen Schritt über die Mensch-Maschine-Schnittstelle und/oder zum Vorgeben von Transitionsbedingungen für einen Übergang zu einem gemäß dem Flussschaubild möglichen, dem jeweiligen Schritt nachfolgenden Schritt über die Mensch-Maschine-Schnittstelle,
- Mittel zum Empfangen zumindest einer über die Mensch-Maschine-Schnittstelle durch die Bedienperson gemachten Eingabe für zumindest einen Teil der ausgewählten Prozessmodule und/oder Dienste zum Vorgeben von Prozesssteuerbefehlen für den jeweiligen Schritt (28, 32, 36) und/oder zum Vorgeben von Transitionsbedingungen für einen Übergang zu einem gemäß dem Flussschaubild möglichen, dem jeweiligen Schritt (28, 32, 36) nachfolgenden Schritt (32, 36),
- Mittel zum Bereitstellen der Steuerinformation anhand
d) der Definition der Prozessstrecke und
e) der zu den für die Prozessstrecke ausgewählten Diensten vorliegenden Dienstinformation beziehungsweise der zu den ausgewählten Prozessmodulen vorliegenden Prozessmodulinformation und/oder Dienstinformation sowie
f) anhand der vorgegebenen Prozesssteuerbefehle und Transitionsbedingungen.

16. Datenverarbeitungsvorrichtung nach Anspruch 15, bei dem die Mensch-Maschine-Schnittstelle einen Bildschirm und eine Eingabeeinrichtung, vorzugsweise umfassend eine Computermaus und/oder Tastfelder auf dem Bildschirm, aufweist.

17. Datenverarbeitungsvorrichtung nach Anspruch 15 oder 16, ferner aufweisend einen Speicher zum Speichern der bereitgestellten Steuerinformation.
